# EUROPEAN PATENT SPECIFICATION

(11) **EP 4 328 593 B1**
(45) Date of publication and mention of the grant of the patent: **09.09.2026**
(21) Application number: 22791306.8
(22) Date of filing: 27.01.2022
(51) Int. Cl.: G01N 35/10

(54) **AUTOMATIC ANALYSIS DEVICE AND METHOD FOR CONTROLLING SAME**
AUTOMATISCHE ANALYSEVORRICHTUNG UND VERFAHREN ZUR STEUERUNG DAVON
DISPOSITIF D'ANALYSE AUTOMATIQUE ET PROCÉDÉ DE COMMANDE ASSOCIÉ

(30) Priority: 20.04.2021 JP 2021070924
(43) Date of publication of application: 28.02.2024
(73) Proprietor: HITACHI HIGH-TECH CORPORATION, Tokyo 105-6409 (JP)
(72) Inventor: ITO, Mayuko, Tokyo 105-6409 (JP); MATSUOKA, Shinya, Tokyo 105-6409 (JP)
(74) Representative: Strehl & Partner mbB
(86) International application number: PCT/JP2022/003097
(87) International publication number: WO 2022/224521

(56) References cited:
- WO-A1-2008/108328
- WO-A1-2017/141626
- JP-A- 2003 145 077
- JP-A- 2017 009 299
- JP-A- H11 271 331
- US-A1- 2016 069 922

## Description

### Technical Field

This invention relates to an automatic analyzer.

### Background Art

An automatic analyzer automatically qualitatively, or quantitatively, analyzes a specific component contained in a sample, such as blood or urine. In the automatic analyzer, a dispensing probe to dispense the sample is appropriately cleaned to suppress generation of contamination and maintain analytical accuracy. A cleaning liquid reserved in a reservoir is used to clean the dispensing probe. When a highly volatile cleaning liquid is used, a solute may precipitate if left exposed to the atmosphere for a long time. In addition, a component harmful to a human body or environment, such as an organic solvent, disadvantageously evaporates. The precipitation can be prevented by water displacement of the flow path. However, if all the cleaning liquid in the flow path is replaced, the cleaning liquid is unnecessarily consumed.

In patent literature 1, therefore, internal washing water is discharged from the dispensing probe into the reservoir, and the cleaning liquid is replaced with water by pushing the cleaning liquid out of the reservoir, thereby precipitation of the solute is prevented without consuming the cleaning liquid unnecessarily.

### Citation List

### Patent Literature

PTL 1: Japanese Unexamined Patent Application Publication No. 2019-74311.

US 2016/069922 A1 discloses an automatic analyzer having a reservoir with supply ports for cleaning liquid and detergent and a waste liquid port for discharging the cleaning liquid and the detergent. Another automatic analyzer similar to the one of the present invention is disclosed in WO 2008/108328 A1.

### Summary of Invention

### Technical Problem

However, PTL 1 gives insufficient consideration to precipitation of the solute in the cleaning liquid and to volatilization of a component of the cleaning liquid. Specifically, although contaminated cleaning liquid is discharged by discharging the internal washing water from the dispensing probe to the cleaning liquid reserved in the reservoir, some cleaning liquid diluted with water remains in the reservoir, and thus the solute may precipitate from the cleaning liquid and clog the dispensing probe.

Therefore, an object of the present invention is to provide an automatic analyzer that can suppress precipitation of the solute in the cleaning liquid in the reservoir used for cleaning the dispensing probe.

### Solution to Problem

To achieve the object, the invention is characterized in that the cleaning liquid reserved in the reservoir is drawn into a flow path connected to the reservoir, and then system water is supplied to the reservoir.

The automatic analyzer and the method for controlling an automatic analyzer of the present invention are defined in the independent claims. Further advantageous features are set out in the dependent claims.

### Advantageous Effects of Invention

According to the invention, an automatic analyzer can be provided, which is capable of preventing precipitation of a solute in a cleaning liquid in a reservoir used for cleaning a dispensing probe.

### Brief Description of Drawings

[FIG. 1] FIG. 1 is a plan view showing a configuration example of an automatic analyzer.
[FIG. 2] FIG. 2 shows a cleaning tank including a reservoir.
[FIG. 3] FIG. 3 shows an operation according to a first embodiment.
[FIG. 4] FIG. 4 shows an operation according to a second embodiment.

### Description of Embodiments

Hereinafter, some preferred embodiments of the automatic analyzer according to the invention will be described with reference to the accompanying drawings. The automatic analyzer analyzes a sample using a reaction liquid obtained by reacting a sample, such as blood or urine, with a reagent.

### First Embodiment

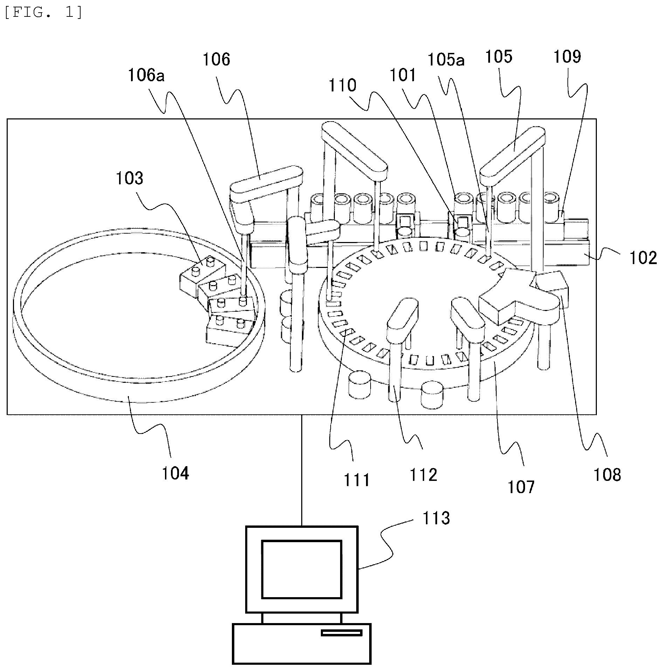

An example of an overall configuration of the automatic analyzer of a first embodiment is described with reference to Fig. 1. The automatic analyzer includes a sample transport unit 102, a reagent disk 104, a sample dispensing unit 105, a reagent dispensing unit 106, a reaction disk 107, a measurement unit 108, a cleaning tank 110, and a control unit 113. Each unit is now described. The vertical direction is defined as a Z direction, and the horizontal plane is defined as an XY plane.

The sample transport unit 102 transports a sample container 101, which is placed on a sample rack 109 while housing a sample such as blood or urine, to a position at which the sample dispensing unit 105 can access the sample container 101.

The sample dispensing unit 105 dispenses the sample from the sample container 101 transported by the sample transport unit 102 into a reaction container 111 disposed on the reaction disk 107. A sample dispensing probe 105a of the sample dispensing unit 105 is used for dispensing the sample. Specifically, the sample dispensing probe 105a is put into the sample container 101 and aspirates the sample, and then moves to the reaction container 111 to discharge the sample.

The reaction disk 107 keeps a plurality of reaction containers 111, arranged in a circumferential manner, within a predetermined temperature range, and also transports a reaction container 111, into which the sample has been dispensed, to a position at which the reagent dispensing unit 106 can access the reaction container 111. The reagent disk 104 stores a reagent container 103, which houses a reagent to be used for analysis, at a temperature within a predetermined temperature range.

The reagent dispensing unit 106 dispenses the reagent from the reagent container 103 stored by the reagent disk 104 into the reaction container 111 into which the sample has been dispensed. A reagent dispensing probe 106a of the reagent dispensing unit 106 is used to dispense the reagent. Specifically, the reagent dispensing probe 106a is put into the reagent container 103 and aspirates the reagent, and then moves to the reaction container 111 and discharges the reagent.

The reaction container 111, into which the sample and the reagent have been dispensed, is transported by the reaction disk 107 to a position at which the stirring unit 112 can access the reaction container 111. The stirring unit 112 stirs the sample and the reagent in the reaction container 111. The heat retention by the reaction disk 107 and the stirring by the stirring unit 112 accelerate a reaction between the sample and the reagent in the reaction container 111 to produce a reaction liquid. The reaction disk 107 transports the reaction container 111 housing the reaction liquid to the measurement unit 108.

The measurement unit 108 measures physical properties of the reaction liquid housed in the reaction container 111, such as the amount of light emitted, the amount of scattered light, the amount of transmitted light, a current value, and a voltage value, for example. It is to be noted that the physical properties to be measured are not limited to these. The physical properties measured by the measurement unit 108 are transmitted to the control unit 113.

The control unit 113 is a device, which receives the physical properties transmitted from the measurement unit 108 and outputs analysis results and also controls the respective units of the automatic analyzer, and is, for example, configured by a so-called computer.

The sample dispensing probe 105a of the sample dispensing unit 105 and the reagent dispensing probe 106a of the reagent dispensing unit 106 are cleaned using a cleaning liquid after dispensing the sample and the reagent in order to suppress generation of contamination. Usable cleaning liquids include highly volatile solutions such as organic solvents, alkaline solutions, and neutral solutions containing surfactants.

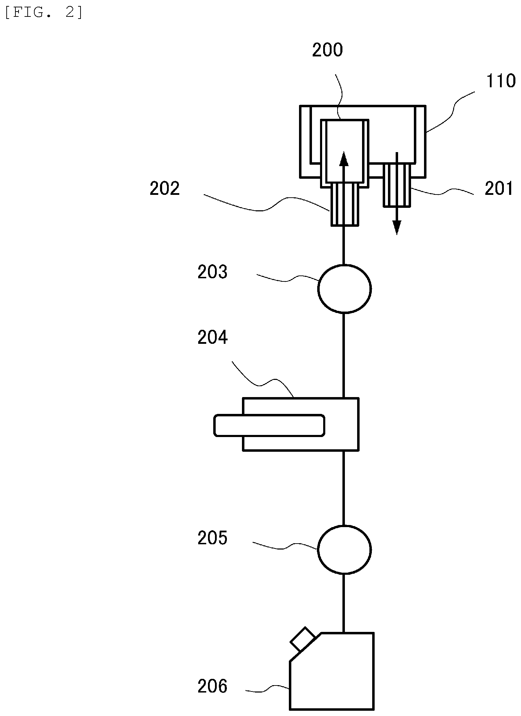

The cleaning tank 110 used for cleaning the sample dispensing probe 105a of the sample dispensing unit 105 is now descried with reference to Fig. 2. The reagent dispensing probe 106a of the reagent dispensing unit 106 is also cleaned by the same mechanism as that for the cleaning tank 110. The cleaning tank 110 has a reservoir 200 for reserving the cleaning liquid used for cleaning the sample dispensing probe 105a, and a discharge tube 201 for discharging the cleaning liquid used for cleaning, and the like.

A flow path 202 is connected to the reservoir 200, and the cleaning liquid stored in a tank 206 is supplied to the reservoir 200 through the flow path 202. The inner diameter of the flow path 202 is sufficiently smaller than the inner diameter of the reservoir 200, for example, the inner diameter of the flow path 202 is less than 2 mm while the inner diameter of the reservoir 200 is 5 to 6 mm. A first valve 203, a syringe 204, and a second valve 205 are provided between the flow path 202 and the tank 206. The first valve 203 controls opening and closing between the flow path 202 and the syringe 204. The syringe 204 aspirates or discharges the cleaning liquid. The first valve 203 controls opening and closing between the syringe 204 and the tank 206.

Description is given on operations of the first valve 203, the syringe 204, and the second valve 205 when the cleaning liquid stored in the tank 206 is supplied to the reservoir 200. First, while the first valve 203 is closed and the second valve 205 is open, the syringe 204 aspirates the cleaning liquid in the tank 206. Subsequently, while the second valve 205 is closed and the first valve 203 is open, the syringe 204 discharges the cleaning liquid, thereby the cleaning liquid is supplied to the reservoir 200 through the flow path 202. Repeating the operations of the first valve 203, the syringe 204, and the second valve 205 makes it possible to supply the cleaning liquid in an amount exceeding the capacity of the reservoir 200 and cause the cleaning liquid to overflow from the reservoir 200. The cleaning liquid overflowing from the reservoir 200 is discharged through the discharge tube 201.

If the cleaning liquid supplied to the reservoir 200 is left for a long time, a solute may precipitate due to the volatilization of a solvent, and the precipitated solute may clog the sample dispensing probe 105a. In the first embodiment, therefore, precipitation of the solute is suppressed by the following operation.

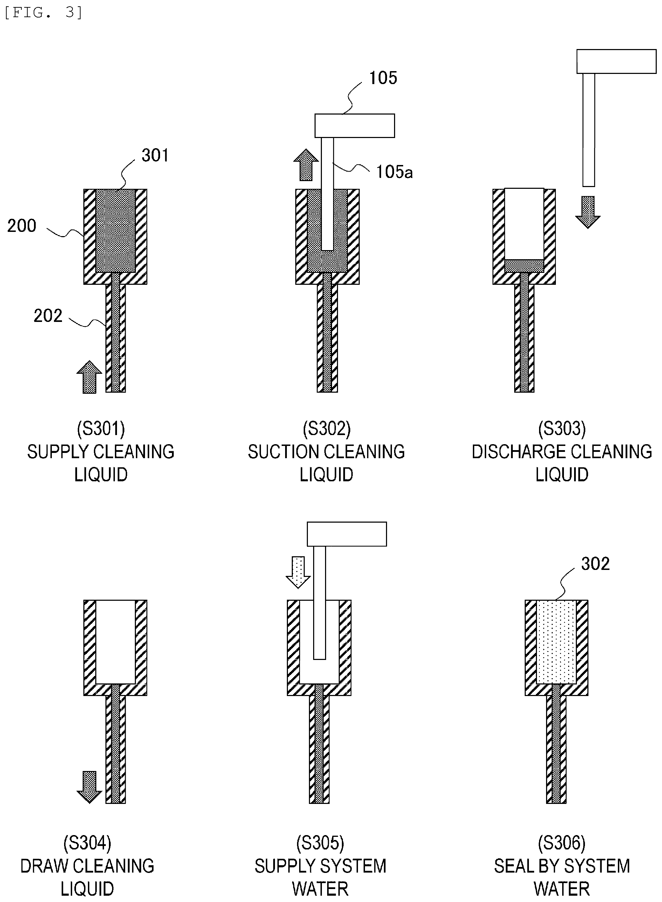

The operation in the first embodiment is now described step by step with reference to Fig. 3.

### (S301)

The control unit 113 controls the first valve 203, the syringe 204, and the second valve 205 to supply the cleaning liquid 301 to the reservoir 200. When a predetermined amount of cleaning liquid 301 is supplied to the reservoir 200, the first valve 203 is closed.

### (S302)

The control unit 113 controls the sample dispensing unit 105 so that the cleaning liquid 301 is aspirated by the sample dispensing probe 105a.

### (S303)

The control unit 113 controls the sample dispensing unit 105 to discharge the cleaning liquid 301 to the outside of the reservoir 200. S302 and S303 may be repeated to clean the sample dispensing probe 105a. Since the sample dispensing probe 105a cannot fully aspirate the cleaning liquid 301 in the reservoir 200, some cleaning liquid 301 remains at the bottom of the reservoir 200.

In this stage, the cleaning liquid 301 may be supplied once to the reservoir 200 so as to overflow. This makes it possible to remove the cleaning liquid 301, which may have been in contact with the sample dispensing probe 105a and thus contaminated, from the reservoir 200. If such contamination of the cleaning liquid 301 by the sample dispensing probe 105a is substantially not a problem, this step may be omitted. After the cleaning liquid 301 is supplied to the reservoir 200, there may be provided the process again, in which the control unit 113 controls the sample dispensing unit 105 to discharge the cleaning liquid 301 to the outside of the reservoir 200.

### (S304)

The control unit 113 controls the first valve 203 and the syringe 204 to draw the cleaning liquid 301, which remains at the bottom of the reservoir 200, into the flow path 202. Specifically, the syringe 204 aspirates the cleaning liquid 301 while the first valve 203 is open, thereby the cleaning liquid 301 is drawn into the flow path 202 such that the liquid level of the cleaning liquid 301 is located at/below the upper end of the flow path 202. When the cleaning liquid 301 is drawn into the flow path 202, the first valve 203 is closed.

### (S305)

The control unit 113 controls the sample dispensing unit 105 to supply system water 302 from the sample dispensing probe 105a to the reservoir 200. Since the cleaning liquid 301 is drawn into the flow path 202 having a sufficiently smaller inner diameter than that of the reservoir 200, diffusion of the cleaning liquid 301 toward the system water 302 is suppressed.

### (S306)

A predetermined amount of system water 302 is supplied to the reservoir 200, and thus the cleaning liquid 301 is sealed by the system water 302. Since the cleaning liquid 301 sealed by the system water 302 is not exposed to the atmosphere, the solvent does not volatilize even if left for a long time.

According to the operation described above, since the cleaning liquid 301 in the reservoir 200 escapes volatilization of the solvent, precipitation of the solute is suppressed. In addition, precipitation of the solute in the cleaning liquid 301 is suppressed, and thus the sample dispensing probe 105a can be prevented from clogging. When the system water 302, which is supplied to the reservoir 200 to seal the cleaning liquid 301, is replaced with the cleaning liquid 301, at least part of the system water 302 is preferably beforehand discharged to the outside of the reservoir 200 by the sample dispensing probe 105a. At least part of the system water 302 is thus beforehand discharged to the outside of the reservoir 200 by the sample dispensing probe 105a, making it possible to reduce the amount of the cleaning liquid 301 supplied from the flow path 202.

If all the system water 302 in the reservoir 200 is caused to overflow by the cleaning liquid 301 supplied from the flow path 202, a large amount of the cleaning liquid 301 is required because replacement proceeds while the system water 302 and the cleaning liquid 301 are increasingly mixed together. In contrast, when at least part of the system water 302 is beforehand discharged to the outside of the reservoir 200, since less system water 302 mixes with the cleaning liquid 301 supplied from the flow path 202, a decreased amount of the cleaning liquid 301 can be supplied.

### Second Embodiment

In the description of the first embodiment, the system water 302 is used to seal the cleaning liquid 301 drawn into the flow path 202 connected to the reservoir 200. Although diffusion of the cleaning liquid 301, which has been drawn into the flow path 202, toward the system water 302 is suppressed, such diffusion is not perfectly prevented. When the cleaning liquid 301 that has diffused toward the system water 302 comes into contact with the atmosphere, the solute may precipitate. In the description of the second embodiment, therefore, the cleaning liquid 301 is prevented from diffusing toward the system water 302. Since respective configurations of the automatic analyzer and the cleaning tank 110 in the second embodiment are the same as those in the first embodiment, duplicated description is omitted.

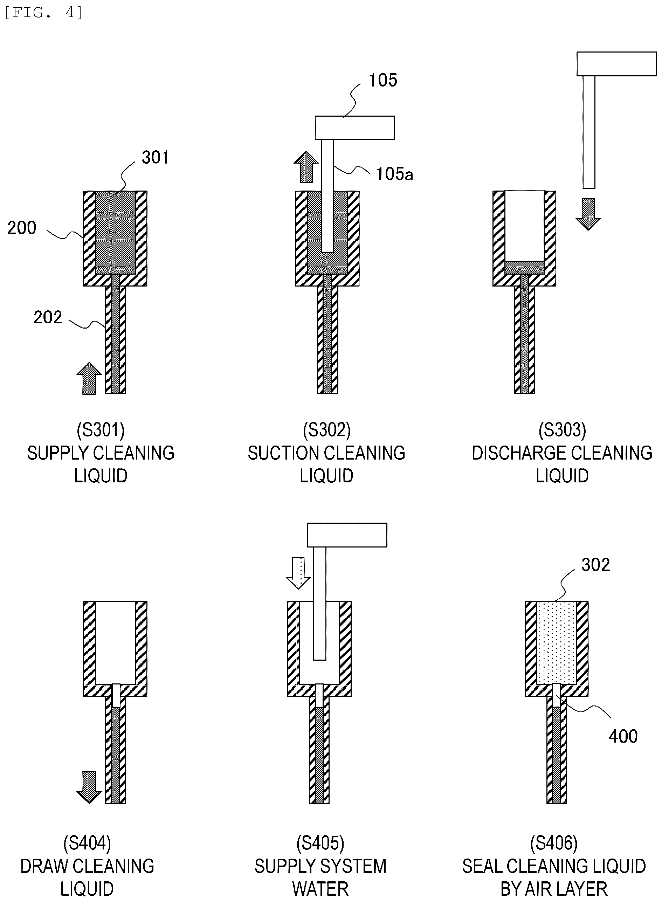

Operations in the second embodiment are now described step by step with reference to Fig. 4. The same step numbers are given to the same operations as in the first embodiment to simplify the description.

### (S301) to (S303)

As in the first embodiment, the cleaning liquid 301 supplied to the reservoir 200 is aspirated by the sample dispensing probe 105a and discharged to the outside of the reservoir 200. Some cleaning liquid 301 remains at the bottom of the reservoir 200.

### (S404)

The control unit 113 controls the first valve 203 and the syringe 204 to draw the cleaning liquid 301, which remains at the bottom of the reservoir 200, into the flow path 202. Specifically, the syringe 204 aspirates the cleaning liquid 301 while the first valve 203 is open, the cleaning liquid 301 is drawn into the flow path 202 such that the liquid level of the cleaning liquid 301 is located below, for example, about 2 to 3 mm below, the upper end of the flow path 202.

### (S405)

The control unit 113 controls the sample dispensing unit 105 to supply the system water 302 from the sample dispensing probe 105a to the reservoir 200. Due to pressure of air that exists between the upper end of the flow path 202 and the liquid level of the cleaning liquid 301, the system water 302 cannot flow into the flow path 202 and remains in the reservoir 200. As a result, an air layer 400 is formed between the system water 302 and the cleaning liquid 301.

### (S306)

A predetermined amount of system water 302 is supplied to the reservoir 200, and thus the cleaning liquid 301 is sealed by the system water 302 and isolated from the system water 302 by the air layer 400. Since the cleaning liquid 301, sealed by the system water 302 and the air layer 400, is not exposed to the atmosphere, the solvent does not volatilize even if the cleaning liquid 301 is left for a long time. Further, the cleaning liquid 301 isolated from the system water 302 by the air layer 400 will not diffuse toward the system water 302.

According to the operation described above, the cleaning liquid 301 in the reservoir 200 does not diffuse toward the system water 302, making it possible to prevent volatilization of the solvent and precipitation of the solute. In addition, since precipitation of the solute in the cleaning liquid 301 can be suppressed, clogging of the sample dispensing probe 105a is eliminated.

The operation illustrated in Fig. 3 or 4 may be performed when waiting time before cleaning using the cleaning liquid 301 in the reservoir 200 is longer than a predetermined threshold. At this time, the threshold is preferably set depending on a type of the cleaning liquid, for example, whether the cleaning liquid is of a highly volatile type. For example, the threshold is set to 10 min for a highly volatile cleaning liquid including an organic solvent or the like, and set to 1 hr for an alkaline cleaning liquid having a relatively low volatility.

### Reference Sign List

101: sample container, 102: sample transport unit, 103: reagent container, 104: reagent disk, 105: sample dispensing unit, 105a: sample dispensing probe, 106: reagent dispensing unit, 106a: reagent dispensing probe, 107: reaction disk, 108: measurement unit, 109: sample rack, 110: cleaning tank, 111: reaction container, 112: stirring unit, 113: control unit, 200: reservoir, 201: discharge tube, 202: flow path, 203: first valve, 204: syringe, 205: second valve, 206: tank, 301: cleaning liquid, 302: system water, 400: air layer

## Claims

1. An automatic analyzer for analyzing a sample, the automatic analyzer comprising:
a dispensing probe (105a, 106a) configured to dispense the sample or a reagent;
a reservoir (200) configured to reserve a cleaning liquid (301) used to clean the dispensing probe;
a flow path (202) connected to the reservoir to allow the cleaning liquid to flow through it, when the cleaning liquid is supplied to the reservoir and when it is drawn from the reservoir; and
a control unit (113) adapted to control all units of the automatic analyzer, wherein
the control unit is adapted to cause the cleaning liquid in the reservoir to be drawn into the flow path so that a liquid level of the cleaning liquid is located below an upper end of the flow path, and then to cause system water (302) to be supplied to the reservoir by the dispensing probe such as to seal the cleaning liquid from the atmosphere.

2. The automatic analyzer according to Claim 1, wherein
the control unit (113) is adapted to control the drawing of the cleaning liquid (301) into the flow path (202) and the supplying of the system water (302) to the reservoir (200) such as to form an air layer (400) between the cleaning liquid and the system water.

3. The automatic analyzer according to Claim 1, wherein
the control unit (113) is adapted to cause, before the cleaning liquid (301) is drawn into the flow path (202), at least a part of the cleaning liquid to be suctioned in the reservoir (200) by the dispensing probe (105a, 106a) and to cause the cleaning liquid to be discharged to an outside of the reservoir.

4. The automatic analyzer according to Claim 1, wherein
the control unit (113) is adapted to cause, before the cleaning liquid (301) is drawn into the flow path (202), the cleaning liquid to be supplied to the reservoir and to overflow from the reservoir (200).

5. The automatic analyzer according to Claim 1, wherein
when the system water supplied to the reservoir is replaced with the cleaning liquid, the control unit (113) is adapted to cause at least a part of the system water (302) to be suctioned by the dispensing probe (105a, 106a) and to cause the cleaning liquid (301) to be discharged to an outside of the reservoir (200).

6. The automatic analyzer according to Claim 1, wherein
when waiting time from the beginning of the exposure of the cleaning liquid (301) in the reservoir (200) to the atmosphere until cleaning of the dispensing probe (105a, 106a) is longer than a predetermined threshold value, the control unit (113) is adapted to cause the cleaning liquid to be drawn into the flow path (202) and to cause the system water (302) to be supplied to the reservoir.

7. The automatic analyzer according to Claim 6, wherein
the threshold value is set according to a type of the cleaning liquid (301).

8. A method for controlling an automatic analyzer for analyzing a sample, the method comprising:
drawing (S304) a cleaning liquid (301) reserved in a reservoir (200) into a flow path (202) which is connected to the reservoir and allows the cleaning liquid to flow through it when the cleaning liquid is supplied to the reservoir and when it is drawn from the reservoir, so that a liquid level of the cleaning liquid is located below an upper end of the flow path, the cleaning liquid being used for cleaning a dispensing probe (105a, 106a) for dispensing the sample or a reagent; and
supplying system water (302) to the reservoir by the dispensing probe such as to seal the cleaning liquid from the atmosphere.

## Patentansprüche

1. Automatische Analysevorrichtung zur Analyse einer Probe, wobei die automatische Analysevorrichtung umfasst:
eine Abgabesonde (105a, 106a), die dazu eingerichtet ist, die Probe oder ein Reagenz zu abzugeben;
ein Reservoir (200), das dazu eingerichtet ist, eine Reinigungsflüssigkeit (301) zu speichern, die zur Reinigung der Abgabesonde verwendet wird;
einen Strömungsweg (202), der mit dem Reservoir verbunden ist, um der Reinigungsflüssigkeit zu ermöglichen, durch ihn zu fließen, wenn die Reinigungsflüssigkeit dem Reservoir zugeführt wird und wenn sie aus dem Reservoir abgezogen wird; und
eine Steuereinheit (113), die dazu ausgelegt ist, alle Einheiten der automatischen Analysevorrichtung zu steuern,
wobei die Steuereinheit dazu ausgelegt ist, zu bewirken, dass die Reinigungsflüssigkeit in dem Reservoir in den Strömungsweg abgezogen wird, so dass sich ein Flüssigkeitspegel der Reinigungsflüssigkeit unterhalb eines oberen Endes des Strömungswegs befindet, und dann zu bewirken, dass Systemwasser (302) dem Reservoir durch die Abgabesonde zugeführt wird, um die Reinigungsflüssigkeit von der Atmosphäre zu versiegeln.

2. Automatische Analysevorrichtung nach Anspruch 1, wobei
die Steuereinheit (113) dazu ausgelegt ist, das Abziehen der Reinigungsflüssigkeit (301) in den Strömungsweg (202) und das Zuführen des Systemwassers (302) zum Reservoir (200) so zu steuern, dass eine Luftschicht (400) zwischen der Reinigungsflüssigkeit und dem Systemwasser gebildet wird.

3. Automatische Analysevorrichtung nach Anspruch 1, wobei
die Steuereinheit (113) dazu ausgelegt ist, zu bewirken, bevor die Reinigungsflüssigkeit (301) in den Strömungsweg (202) abgezogen wird, dass mindestens ein Teil der Reinigungsflüssigkeit im Reservoir (200) durch die Abgabesonde (105a, 106a) angesaugt wird und zu bewirken, dass die Reinigungsflüssigkeit zu einer Außenseite des Reservoirs abgegeben wird.

4. Automatische Analysevorrichtung nach Anspruch 1, wobei
die Steuereinheit (113) dazu ausgelegt ist, zu bewirken, bevor die Reinigungsflüssigkeit (301) in den Strömungsweg (202) abgezogen wird, dass die Reinigungsflüssigkeit dem Reservoir zugeführt wird und aus dem Reservoir (200) überläuft.

5. Automatische Analysevorrichtung nach Anspruch 1, wobei,
wenn das dem Reservoir zugeführte Systemwasser durch die Reinigungsflüssigkeit ersetzt wird, die Steuereinheit (113) dazu ausgelegt ist, zu bewirken, dass mindestens ein Teil des Systemwassers (302) durch die Abgabesonde (105a, 106a) angesaugt wird und zu bewirken, dass die Reinigungsflüssigkeit (301) zu einer Außenseite des Reservoirs (200) abgegeben wird.

6. Automatische Analysevorrichtung nach Anspruch 1, wobei
wenn eine Wartezeit vom Beginn der Aussetzung der Reinigungsflüssigkeit (301) in dem Reservoir (200) gegenüber der Atmosphäre bis zur Reinigung der Dispensiersonde (105a, 106a) länger als ein vorbestimmter Schwellwert ist, die Steuereinheit (113) dazu ausgelegt ist, zu bewirken, dass die Reinigungsflüssigkeit in den Strömungsweg (202) abgezogen wird und zu bewirken, dass das Systemwasser (302) dem Reservoir zugeführt wird.

7. Automatische Analysevorrichtung nach Anspruch 6, wobei
der Schwellwert entsprechend einem Typ der Reinigungsflüssigkeit (301) eingestellt wird.

8. Verfahren zur Steuerung einer automatischen Analysevorrichtung zur Analyse einer Probe, wobei das Verfahren umfasst:
Abziehen (S304) einer Reinigungsflüssigkeit (301), die in einem Reservoir (200) gespeichert ist, in einen Strömungsweg (202), der mit dem Reservoir verbunden ist und der Reinigungsflüssigkeit ermöglicht, durch ihn zu fließen, wenn die Reinigungsflüssigkeit dem Reservoir zugeführt wird und wenn sie aus dem Reservoir abgezogen wird, so dass sich ein Flüssigkeitspegel der Reinigungsflüssigkeit unterhalb eines oberen Endes des Strömungswegs befindet, wobei die Reinigungsflüssigkeit zur Reinigung einer Abgabesonde (105a, 106a) zum Abgeben der Probe oder eines Reagenz verwendet wird; und
Zuführen von Systemwasser (302) zum Reservoir durch die Abgabesonde, um die Reinigungsflüssigkeit von der Atmosphäre zu versiegeln.

## Revendications

1. Analyseur automatique pour analyser un échantillon, l'analyseur automatique comprenant ;
une sonde (105a, 106a) de distribution configurée pour distribuer l'échantillon ou un réactif ;
un réservoir (200) configuré pour réserver un liquide (301) de nettoyage utilisé pour nettoyer la sonde de distribution ;
un chemin d'écoulement (202) connecté au réservoir pour permettre que le liquide de nettoyage s'écoule à travers celui-ci, lorsque le liquide de nettoyage est alimenté jusqu'au réservoir et lorsqu'il est tiré hors du réservoir ; et
une unité (113) de commande adaptée à commander toutes les unités de l'analyseur automatique, dans lequel
l'unité de commande est adaptée à amener le liquide de nettoyage dans le réservoir à être tiré jusque dans le chemin d'écoulement de façon à ce qu'un niveau de liquide du liquide de nettoyage soit situé en-dessous d'une extrémité supérieure du chemin d'écoulement, et ensuite à amener l'eau de système (302) à être alimentée dans le réservoir par la sonde de distribution de façon à isoler le liquide de nettoyage par rapport à l'atmosphère.

2. Analyseur automatique selon la revendication 1, dans lequel
l'unité (113) de commande est adaptée à commander le tirage du liquide (301) de nettoyage jusque dans le chemin d'écoulement (202) et l'alimentation de l'eau de système (302) dans le réservoir (200) de façon à former une couche d'air (400) entre le liquide de nettoyage et l'eau de système.

3. Analyseur automatique selon la revendication 1, dans lequel
l'unité (113) de commande est adaptée à amener, avant que le liquide (301) de nettoyage ne soit tiré dans le chemin d'écoulement (202), au moins une partie du liquide de nettoyage à être aspirée dans le réservoir (200) par la sonde (105a, 106a) de distribution et à amener le liquide de nettoyage à être déchargé jusqu'à un extérieur du réservoir.

4. Analyseur automatique selon la revendication 1, dans lequel
l'unité (113) de commande est adaptée à amener, avant que le liquide (301) de nettoyage ne soit tiré dans le chemin d'écoulement (202), le liquide de nettoyage à être alimenté dans le réservoir et à déborder du réservoir (200).

5. Analyseur automatique selon la revendication 1, dans lequel
lorsque l'eau de système alimentée jusqu'au réservoir est remplacée par le liquide de nettoyage, l'unité (113) de commande est adaptée à amener au moins une partie de l'eau de système (302) à être aspirée par la sonde (105a, 106a) de distribution et à amener le liquide (301) de nettoyage à être déchargé jusqu'à un extérieur du réservoir (200).

6. Analyseur automatique selon la revendication 1, dans lequel
lorsqu'un temps d'attente depuis le début de l'exposition du liquide (301) de nettoyage dans le réservoir (200) à l'atmosphère jusqu'au nettoyage de la sonde (105a, 106a) de distribution est plus long qu'une valeur de seuil prédéterminée, l'unité (113) de commande est adaptée à amener le liquide de nettoyage à être tiré dans le chemin d'écoulement (202) et à amener l'eau de système (302) à être alimentée dans le réservoir.

7. Analyseur automatique selon la revendication 6, dans lequel
la valeur de seuil est fixée en fonction d'un type du liquide (301) de nettoyage.

8. Procédé pour commander un analyseur automatique pour analyser un échantillon, le procédé comprenant :
le tirage (S304) d'un liquide (301) de nettoyage réservé dans un réservoir (200) dans un chemin d'écoulement (202) qui est connecté au réservoir et permet que le liquide de nettoyage s'écoule à travers celui-ci lorsque le liquide de nettoyage est alimenté jusqu'au réservoir et lorsqu'il est tiré hors du réservoir, de façon à ce qu'un niveau de liquide du liquide de nettoyage soit situé en-dessous d'une extrémité supérieure du chemin d'écoulement, le liquide de nettoyage étant utilisé pour nettoyer une sonde (105a, 106a) de distribution pour distribuer l'échantillon ou un réactif ; et
l'alimentation d'eau de système (302) jusqu'au réservoir par la sonde de distribution de façon à isoler le liquide de nettoyage par rapport à l'atmosphère.
